# EUROPEAN PATENT APPLICATION

(11) **EP 3 367 193 A1**
(43) Date of publication of application: **29.08.2018**
(21) Application number: 15912016.1
(22) Date of filing: 31.12.2015
(51) Int. Cl.: G05B 19/418, G05B 19/042

(54) **INTEGRATED CONTROL SYSTEM AND METHOD FOR ELECTRONIC DEVICES**

(71) Applicant: Shenzhen Royole Technologies Co., Ltd., Shenzhen, Guangdong 518052 (CN)
(72) Inventor: YANG, Songling, Shenzhen Guangdong 518052 (CN)
(74) Representative: Loo, Chi Ching
(86) International application number: PCT/CN2015/100313
(87) International publication number: WO 2017/113392

(57) **Abstract**

The disclosure provides an integrated control system (10) for electronic devices and an integrated control method for electronic devices. The integrated control system (10) for electronic devices is configured to control a number of electronic devices, and includes: a controller (500), connected to the electronic devices; and a number of touch panels (100) each associated to one corresponding electronic device through the controller (500) and configured to generate one corresponding touch signal in response to an operation thereon. The controller (500) is configured to control the corresponding electronic device to perform one corresponding operation according to the touch signal generated by each touch panel (100).

## Description

### TECHNICAL FIELD

This disclosure relates to an electronic field, especially relates to an integrated control system for electronic devices and home appliances and an integrated method thereof.

### BACKGROUND

With the development of science and technology and the improvement of people's living standards, kinds of household electrical appliances (hereafter home electrical appliances) are becoming more various, and TV sets, refrigerators, air conditioners and etc. are more and more going into people's life. Usually, each home electrical appliance has its own control system. For example, a TV can be controlled by an TV remote control, the user can operate the TV remote control to control the TV, such as to change channels, to adjust the volume control, etc. A refrigerator usually has a control panel on a refrigerator door. The user can adjust a temperature of a refrigerator chamber or a freezer chamber of the refrigerator by the control panel on the refrigerator door. With the advancement of smart household, it is not convenient for centralized management when each home appliance has its own control system, and a further integration and optimization space is required.

### SUMMARY

Embodiments of the disclosure provide a control system and a control method for centrally controlling electronic devices such as home appliances.

An integrated control system for electronic devices and home appliances, configured to control a number of electronic devices, includes: a controller, connected to the number of electronic devices; and a number of touch panels each associated to one corresponding electronic device through the controller and configured to generate one corresponding touch signal in response to an operation thereon. Wherein the controller is configured to control a corresponding electronic device to perform one corresponding operation according to the touch signal generated by each touch panel.

The present disclosure further provides an integrated control method for electronic devices, configured to control a number of electronic devices. The integrated control method for electronic devices includes following steps: S10: associating each of the touch panels to one corresponding electronic device; S20: detecting a touch signal generated by each touch panel under an operation; and S30: controlling a corresponding electronic device to perform corresponding operations according to the touch signal generated by each touch panel.

Compared with the related art, each touch panel of the integrated control system for electronic devices in the present disclosure is associated to a corresponding electronic device by the controller, and is configured to respond to the operation thereon to generate a corresponding touch signal; the controller controls a corresponding electronic device to perform a corresponding operation, according to the touch signal generated by each touch panel; it can be realized that, the integrated control system for electronic devices in the present disclosure can centrally control various electronic devices, which is convenient for centralized management.

### BRIEF DESCRIPTION OF THE ACCOMPANYING DRAWINGS

For more particular description of technical proposal in embodiments of the disclosure, drawings used in the embodiments will be illustrated simply in the followings. It will be apparent that, the following described drawings are merely illustrative of the present disclosure. It will be apparent to those skilled in the art that other drawings can be obtained from the drawings without any creative work.
FIG. 1 is a block diagram of an integrated control system for electronic devices, according to one embodiment of the disclosure.
FIG. 2 is a schematic diagram of the integrated control system for electronic devices in working environment, according to one embodiment of the disclosure.
FIG. 3 is a circuit diagram of a controller, according to one embodiment of the disclosure.
FIG. 4 is a flowchart illustrating an integrated control method for electronic devices, according to one embodiment of the disclosure.
FIG. 5 is a flowchart illustrating sub-processes of block S20 of FIG. 4, according to one embodiment of the disclosure.

### DETAILED DESCRIPTION OF ILLUSTRATED EMBODIMENTS

The present disclosure will now be described in detail and completely with reference to the accompanying drawings of the embodiments. It is to be understood that the specific embodiments described herein are merely illustrative of the disclosure and are not all embodiments. Any other embodiments that can be obtained by a person skilled in the art without creative work according to the embodiments in the present disclosure shall be all covered within the protection of the disclosure.

It will be appreciated that terms in the embodiments are merely used to describe certain embodiments, and are not intended to limit the disclosure. The terms "one", "the" and "that" used in the embodiments and the claims of the present disclosure are designed for a major form, unless the context clearly said other meanings. It will be appreciated that terms "and/or" used in the present disclosure refers to any or all possible combinations of one or more associated list items. The terms "first", "second", "third", and "fourth" used in the specification, the claims, and the accompany drawings of the present disclosure are used for distinguishing between different objects rather than describing a particular order. The terms "include" and "comprise" as well as variations thereof are intended to cover non-exclusive inclusion. For example, a process, method, system, product, or apparatus including a series of steps or units is not limited to the listed steps or units, it can optionally include other steps or units that are not listed; alternatively, other steps or units inherent to the process, method, product, or device can be included either.

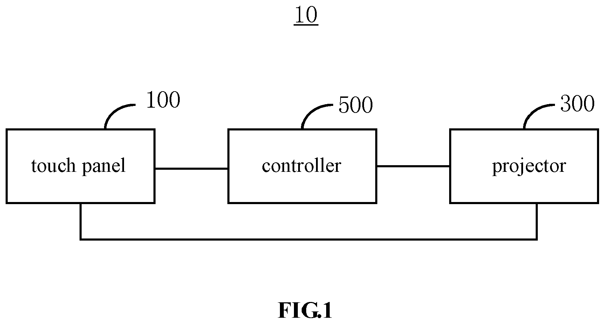

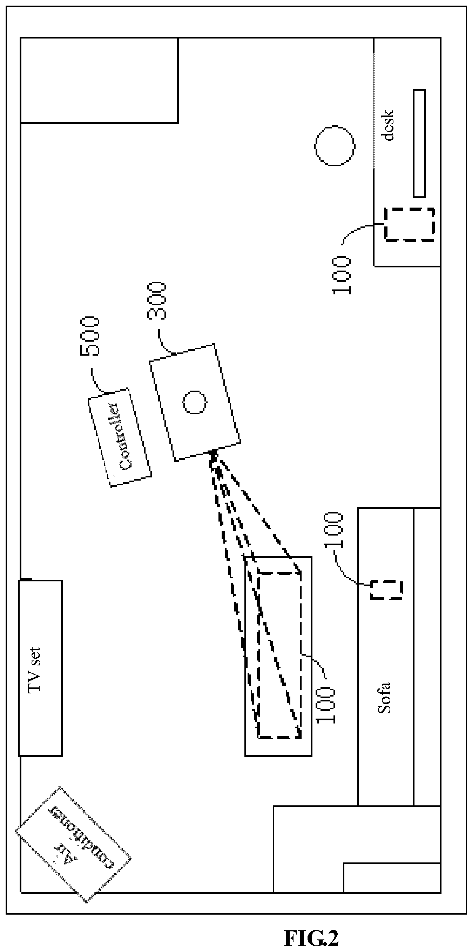

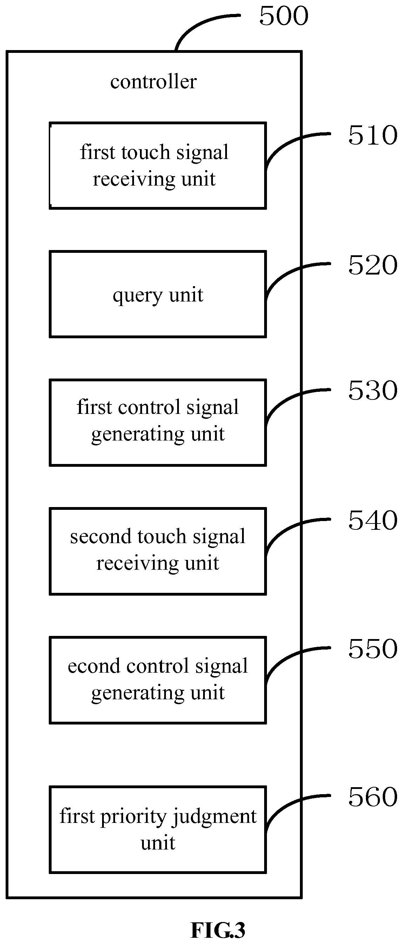

Referring to FIGS. 1 to 3, FIG. 1 is a block diagram of an integrated control system for electronic devices, according to one embodiment of the disclosure; FIG. 2 is a schematic diagram of the integrated control system for electronic devices in working environment, according to one embodiment of the disclosure; FIG. 3 is a circuit diagram of a controller, according to one embodiment of the disclosure. The integrated control system 10 for electronic devices is configured to control a plurality of electronic devices 20. The electronic devices 20 includes but not limited to home electrical appliances such as TV sets, refrigerators, air conditioners and etc. The integrated control system 10 for electronic devices includes a controller 500 and a number of touch panels 100. The controller 500 is connected to the number of electronic devices 20. Each of the touch panels 100 is associated to one corresponding electronic device 20 through the controller 100 and is configured to generate one corresponding touch signal in response to an operation thereon. Wherein, the controller 500 is configured to control the corresponding electronic device 20 to perform one corresponding operation according to the touch signal generated by each touch panel 100.

The integrated control system 10 for electronic devices may also include a projector 300 connected to the controller 500. According to the touch signal generated by the touch panel 100 which is being operated, the controller 500 can also be configured to control the projector 300 to project a corresponding first interface to an area associated with the touch panel 100 which is being operated. The controller 500 can also be configured to control the projector 300 to project a second interface, matching with a state of the corresponding electronic device 20 after being operated, to the area associated with the touch panel 100 which is being operated. The area can be an area not overlapped with the corresponding touch panel 100, for example, an area adjacent to the corresponding touch panel 100, in that case, the touch panel 100 can be designed with a number of button patterns printed by a silk screen process, to let the user to easily understand a position and a function of each button on the touch panel 100, the picture projected by the projector 300 only is configured to display the corresponding state of the electronic device which has been adjusted, to the user.

Unlike the projection position which is adjacent to the touch panel 100, the projection position can also be a position directly projected by the projector 300 on the touch panel 100, to achieve a touch effect similar to a mobile phone or a tablet computer. The touch panels 100 are positioned on predetermined locations. In this exemplary embodiment, the touch panels 100 are positioned on various places in a living room, such as a tea table, an armrest of the sofa, a desk and so on. Each of the touch panels 100 is relative to an electronic device 20, and controls the corresponding electronic device 20 in conjunction with the projector 300 and the controller 500. For example, one touch panel 100 positioned on a tea table is relative to a TV, and the controller 500 controls the TV to perform corresponding operations, according to touch signals of the touch panel 100 associated with the TV. One touch panel 100 positioned on an armrest of the sofa is relative to an air conditioner, and the controller 500 controls the air conditioner to perform corresponding operations, according to touch signals of the touch panel 100 associated with the air conditioner.

The operation of "the controller 500 is configured to control the corresponding electronic device 20 and perform one corresponding operation according to the touch signal generated by each of the plurality of touch panels 100" includes a first operation and a second operation, performed in order. The touch signal includes a first touch signal and a second touch signal respectively corresponding to the first operation and the second operation. The controller 500 responses to the first touch signal, inquires a location of the touch panel 100 which is being operated, and controls the projector 300 to project the first interface to the location. The second operation is performed on the touch panel 100 whereon the first interface is projected. The controller 500 controls the corresponding electronic device 20 to perform corresponding operations according to the second touch signal. Preferably, the controller 500 also is configured to control the projector 300 to project the second interface to the location, the second interface marches with a state of the corresponding electronic device 20 which has been operated. The first operation and the second operation together include at least two operations of single finger clicking, multi-finger clicking, single finger multi-clicking, sliding and pressing. The first operation is different from the second operation.

In another exemplary embodiment, the controller 500 also is configured to generate a first control signal according to the first touch signal. The first control signal is configured to control the projector 300 to project the first interface to the location of the touch panel which is being operated. The controller 500 also is configured to generate a second control signal according to the second touch signal. The second control signal is configured to control an associated electronic device to perform corresponding operations.

The controller 500 can be positioned independently with the projector 300, or can be integrated with the projector 300. The projector 300 can be positioned on a roof of the user's room.

The controller 500 includes a first touch signal receiving unit 510, a query unit 520, a first control signal generating unit 530, a second touch signal receiving unit 540 and a second control signal generating unit 550. The functions of each unit are described as follows.

The first touch signal receiving unit 510 is configured to receive the first touch signal generated by one of the plurality of touch panels 100 under the first operation.

The query unit 520 is configured to query the location of the one of the plurality of touch panels 100, which is being operated, according to the first touch signal.

The first control signal generating unit 530 is configured to generate the first control signal according to the first touch signal. The first control signal is configured to control the projector 300 to project a control interface to a location of the one of the plurality of touch panels 100 which is being operated.

The second touch signal receiving unit 540 is configured to receive the second touch signal generated by the one of the plurality of the touch panels 100 with the first interface projected thereon, when the one of the plurality of the touch panels 100 is operated under the second operation.

The second control signal generation unit 550 is configured to generate the second control signal according to the second touch signal, and to control the corresponding electronic device 20 to perform the corresponding operations, wherein the corresponding electronic device 20 is corresponding to the one of the plurality of touch panels 100.

Preferably, the query unit 520 also is configured to inquire a shape of the one of the plurality of the touch panels 100 which is being operated, in a preset touch panel shapes list, according to the first touch signal. Wherein, the preset touch panel shapes list stores shapes information of the plurality of touch panels 100.

Accordingly, the first control signal generating unit 530 also is configured to control the projector 300 to project a control interface corresponding to the shape of the one of the plurality of the touch panels 100 which is being operated, to a location of the touch panel 100, according to the shape of the touch panel 100. For example, when the touch panel 100 is positioned on the armrest of the sofa, and the shape of the touch panel 100 is arc, and when the user operates the touch panel 100 on the armrest of the sofa, at this point, the first control signal generating unit 530 controls the projector 300 to project a control interface with a shape of arc, on a location of the touch panel 100 which is being operated, according to the shape of the touch panel 100. The control interface is better for fully or more projected on the touch panel 100, and better for the utilization of the touch panel 100. Again, for example, when the touch panel 100 is flatly positioned on a tea table, and the shape of the touch panel 100 is five-pointed star, and when the user operates the touch panel 100 on the tea table, at this point, the first control signal generating unit 530 controls the projector 300 to project a control interface with a shape of five-pointed star, to a location of the touch panel 100 which is being operated, according to the shape of the touch panel 100. The control interface is fully or more projected on the touch panel 100, and better for the utilization of the touch panel 100.

Preferably, the controller 500 also includes a first priority judgment unit 560. The first priority judgment unit 560 is configured to determine the priority of each touch panel 100 when multiple ones of the plurality of touch panels 100 being simultaneously operated. The priority of each touch panel 100 can be automatically set by the controller 500 or set by the user. Accordingly, the first touch signal receiving unit 510 is configured to receive the first touch signal generated by one of the multiple ones of the plurality of touch panels 100 with the highest priority under the first operation. At this point, although a touch panel 100 which does not have the highest priority is also being operated, an operation on the touch panel 100 will not be considered to be the first operation, but is considered to be an invalid operation. For setting the first priority judgment unit 560 in the controller 500, it can resolve the conflicts of multiple touch panels 100 which are being operated simultaneously.

In this exemplary embodiment, each of the plurality of touch panels 100 is a flexible touch panel. The flexible touch panel has characteristics of bendable, good flexibility, thus, the flexible touch panel can be used on a curved surface, and has a much better durability than a traditional touch screen. Compared to the traditional touch screen, the flexible touch panel has a lower probability of accidental damage. And the flexible touch panel is lighter and has a less power consumption than the traditional touch screen, which can improve an endurance ability of an electronic device.

In one exemplary embodiment, the touch panel 100, the projector 300 and the controller 500 can be communicated with each other wirelessly or by cable. A wireless communication can via Bluetooth or Wi-Fi.

Compared with the related art, each touch panel 100 of the integrated control system 10 for electronic devices in the present disclosure is associated to the corresponding electronic device 20 by the controller 500, and is configured to respond to the operation thereon to generate the corresponding touch signal; the controller 500 controls corresponding electronic device 20 to perform the corresponding operation, according to the touch signal generated by the touch panel 100; it can be realized that, the integrated control system 10 for electronic devices in the present disclosure can centrally control various electronic devices, which is convenient for centralized management.

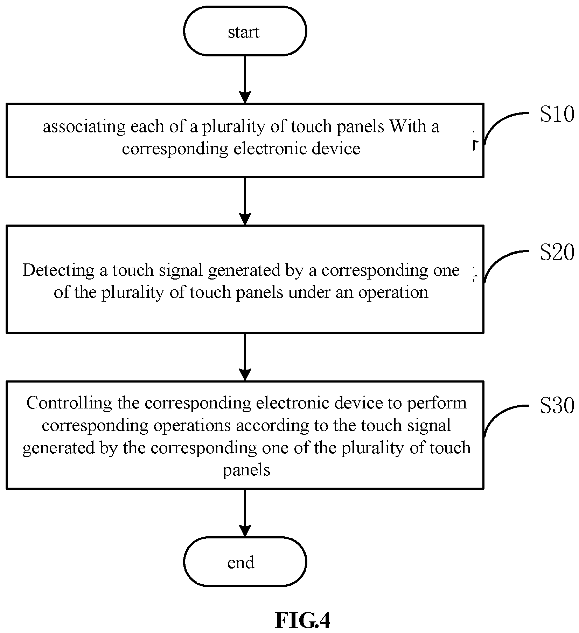

Combined with the FIG. 1 to FIG. 3, and the integrated control system 10 for electronic devices, an integrated control method for electronic devices in the present disclosure is introduced in following. The integrated control method for electronic devices is applied to the above control system 10, and is configured to control a plurality of electronic devices 20. The electronic device 20 includes but not limited to home electric appliances such as TV sets, refrigerators, air conditioners and etc. Referring to FIG. 4, FIG. 4 is a flowchart illustrating the integrated control method for electronic devices, according to one preferred embodiment of the disclosure. The integrated control method for electronic devices includes but not limited to the following actions.

At block S10, each of the plurality of touch panels 100 is associated to one corresponding electronic device 20. The touch panels 100 are positioned on various places, such as a tea table, an armrest of the sofa, a desk and so on.

At block S20, a touch signal generated by a corresponding one of the plurality of touch panels 100 under an operation is detected.

At block S30, a corresponding electronic device 20 is controlled to perform a corresponding operation according to the touch signal generated by the corresponding one of the plurality of touch panels 100.

In one exemplary embodiment, after the action at the block S20, the integrated control method for electronic devices further includes the following action: the projector 300 is controlled to project a first interface, according to the touch signal generated by the touch panel 100 which is being operated, to an area associated to the corresponding one of the plurality of touch panels 100.

In one exemplary embodiment, after the action at the block S20, the integrated control method for electronic devices further includes the following action: the projector 300 is controlled to project a second interface, marching with a state of the corresponding electronic device 20 which has been operated, to the area associated to the corresponding one of the plurality of touch panels 100.

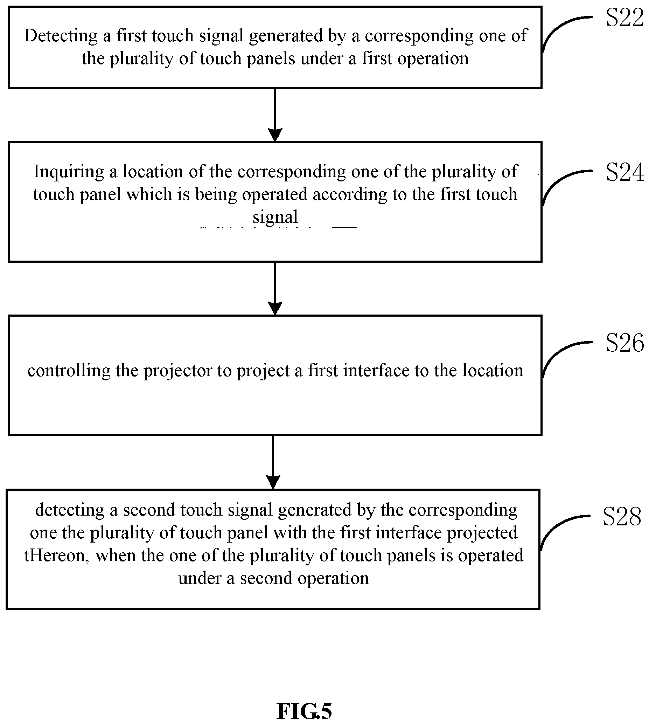

Referring to FIG. 5, in one exemplary embodiment, the action at the block S20 includes the following actions.

At block S22, a first touch signal generated by a corresponding one of the plurality of touch panels touch panels 100 under a first operation is detected.

At block S24, a location of the corresponding one of the plurality of touch panels 100 which is being operated is inquired according to the first touch signal.

At block S26, the projector 300 is controlled to project a first interface to the location.

At block S28, a second touch signal, generated by the corresponding one of the plurality of touch panels 100 with the first interface projected thereon under a second operation, is detected.

Accordingly, the action at the block S30 includes: the corresponding electronic device 20 is controlled to a perform corresponding operation according to the second touch signal.

The first operation and the second operation together include at least two operations of single finger clicking, multi-finger clicking, single finger multi-clicking, sliding and pressing. The first operation is different from the second operation.

In one embodiment, after the action at the block S30, the integrated control method for electronic devices further includes: the projector 300 is controlled to project the second interface to the location, the second interface marches with a state of the corresponding electronic device 20 which has been operated.

Preferably, between the action at the block S24 and the action at the block S26, the integrated control method for electronic devices further includes the following actions.

At block I, a shape of the corresponding one of the plurality of touch panels 100 being operated is inquired in a preset touch panel shapes list according to the first touch signal. Wherein, the preset touch panel shapes list stores shapes information of the plurality of touch panels 100.

At block II, parameters of the projector 300 is adjusted according to the shape of the corresponding one of the plurality of touch panels 100 which is being operated, such that the picture projected by the projector 300 matches with the shape of the corresponding one of the plurality of touch panels 100.

For example, when the touch panel 100 is positioned on an armrest of a sofa, and the shape of the corresponding one of the plurality of touch panels 100 is arc, and when the user operates the touch panel 100 on the armrest of the sofa, at this point, the first control signal generating unit 530 controls the projector 300 to project a control interface with a shape of arc, on the corresponding one of the plurality of touch panels 100 which is being operated, according to the shape of the corresponding one of the plurality of touch panel 100, which is better for fully or more projected on the touch panel 100, and better for the utilization of the touch panel 100. Again, for example, when the corresponding one of the plurality of touch panels 100 is flatly positioned on a tea table, and the shape of the corresponding one of the plurality of touch panels 100 is five-pointed star, and when the user operates the corresponding one of the plurality of touch panels 100 on the tea table, at this point, the first control signal generating unit 530 controls the projector 300 to project a control interface with a shape of five-pointed star, on the corresponding one of the plurality of touch panels 100 which is being operated, according to the shape of the corresponding one of the plurality of touch panels 100, which is better for fully or more projected on the touch panel 100, and better for the utilization of the corresponding one of the plurality of touch panels 100.

Preferably, between the action at the block S22 and the action at the block S24, the integrated control method for electronic devices further includes the following actions.

At block III, it is determined whether a plurality of touch panels 100 is simultaneously operated. If multiples of the plurality of touch panels 100 is simultaneously operated, it is going to block IV.

At block IV, a priority of each the multiple ones of the touch panels 100 is determined.

At block V, a first touch signal generated by a corresponding one of the multiples ones of the plurality of touch panels with the highest priority under the first operation is received.

The priority of each touch panel 100 can be automatically set by the controller 500 or set by the user. Accordingly, when receiving the first touch signal generated by the touch panel 100 with the highest priority under the first operation, at this point, although a touch panel 100 which does not have the highest priority is also be operated, an operation on the touch panel 100 will not be considered to be the first operation, but is considered to be an invalid operation. For the actions at the block III, the block IV, and the block V, it can resolve the conflicts of multiple touch panels 100 being operated simultaneously.

A person skilled in the art can be apparent all or partially processes to realize the above embodiments. The all or partially processes can be executed by related hardware or by computer programs instructing related hardware. The computer programs can be stored in a computer storage medium. When the computer programs being executed, it can perform the steps described in the embodiments of the above method. The computer storage medium can be a magnetic disk, an optical disk, a read-only memory (ROM), a random-access memory (RAM), and so on.

The foregoing description merely depicts some exemplary embodiments of the disclosure and thus is not intended as limiting the scope of the disclosure. All or partially processes can be apparent to realize the above embodiments, and any equivalent changes in accordance with the present invention claims made by a person skilled in the art, shall all be covered within the protection of the disclosure.

## Claims

1. An integrated control system for electronic devices, being operable to control a plurality of electronic devices, comprising:
a controller connected to the plurality of electronic devices; and
a plurality of touch panels, each of the plurality of touch panels being associated to a corresponding electronic device through the controller, each of the plurality of touch panels being operable to generate a corresponding touch signal in response to an operation thereon;
wherein the controller is operable to control a corresponding electronic device to perform a corresponding operation according to the corresponding touch signal generated by each of the plurality of touch panels.

2. The integrated control system for electronic devices according to claim 1, **characterized in that** the integrated control system further comprises a projector connected to the controller, according to a touch signal generated by one of the plurality of touch panels which is being operated, the controller is further operable to control the projector to project a corresponding first interface to an area associated with the one of the plurality of touch panels.

3. The integrated control system for electronic devices according to claim 2, **characterized in that** the controller is further operable to control the projector to project a second interface to the area associated with the one of the plurality of touch panels, wherein the second interface matches with a state of a corresponding electronic device after being operated.

4. The integrated control system for electronic devices according to claim 1, wherein the plurality of control panels is positioned on predetermined locations.

5. The integrated control system for electronic devices according to claims 4, **characterized in that** the integrated control system further comprises a projector connected to the controller; the operation comprises a first operation and a second operation performed in order, the corresponding touch signal comprises a first touch signal and a second touch signal respectively corresponding to the first operation and the second operation, the controller is operable to response to the first touch signal, inquire a location of one of the plurality of touch panels which is being operated, and control the projector to project a first interface to the location, the second operation is performed on the one of the plurality of touch panels whereon the first interface is projected, the controller is operable to control the corresponding electronic device to perform the corresponding operation according to the second touch signal.

6. The integrated control system for electronic devices according to claim 5, **characterized in that** the controller is further operable to control the projector to project a second interface marching with a state of the corresponding electronic device which has been operated.

7. The integrated control system for electronic devices according to claim 5, **characterized in that** the first operation and the second operation together comprise at least two operations of single finger clicking, multi-finger clicking, single finger multi-clicking, sliding and pressing; the first operation is different from the second operation.

8. The integrated control system for electronic devices according to claim 5, **characterized in that** the controller is further operable to generate a first control signal according to the first touch signal, the first control signal controls the projector to project the first interface to the location of the one of the plurality of touch panels which is being operated; the controller is further operable to generate a second control signal according to the second touch signal, the second control signal controls the corresponding electronic device to perform the corresponding operation.

9. The integrated control system for electronic devices according to claim 8, **characterized in that** the controller comprises:
a first touch signal receiving unit, being operable to receive the first touch signal generated by the one of the plurality of touch panels under the first operation;
a query unit, being operable to query the location of the one of the plurality of touch panels which is being operated, according to the first touch signal;
a first control signal generating unit, being operable to generate the first control signal according to the first touch signal, the first control signal controlling the projector to project a control interface on the one of the plurality of touch panels which is being operated; and
a second touch signal receiving unit, being operable to receive the second touch signal generated by the one of the plurality of touch panels which has the first interface projected thereon, when the one of the plurality of touch panels is operated under the second operation; and
a second control signal generating unit, being operable to generate the second control signal according to the second touch signal, and to control the corresponding electronic device to perform the corresponding operation, wherein the corresponding device is corresponding to the one of the plurality of touch panels.

10. The integrated control system for electronic devices according to claim 9, **characterized in that** the query unit is further operable to inquire a shape of the one of the plurality of touch panels which is being operated, in a preset touch panel shapes list, according to the first touch signal; the preset touch panel shapes list stores shapes information of the plurality of touch panels;
according to the shape of the one of the plurality of touch panels which is being operated, the first control signal generating unit being further operable to control the projector to project the control interface corresponding to the shape of the one of the plurality of touch panels to a location of the one of the plurality of touch panels.

11. The integrated control system for electronic devices according to claim 9, **characterized in that** the controller further comprises a first priority judgment unit, the first priority judgment unit is operable to determine the priority of each touch panel, when multiple ones of the plurality of touch panels are being simultaneously operated; the first touch signal receiving unit is operable to receive the first touch signal generated by one of the multiple ones of the plurality of touch panels with the highest priority under the first operation.

12. The integrated control system for electronic devices according to claim 1, **characterized in that** each of the plurality of touch panels is a flexible touch panel.

13. An integrated control method for electronic devices, being operable to control the electronic devices, comprising:
S10, associating each of a plurality of touch panels with a corresponding electronic device;
S20, detecting a touch signal generated by a corresponding one of the plurality of touch panels under an operation; and
S30, controlling the corresponding electronic device to perform a corresponding operation according to the touch signal generated by the corresponding one of the plurality of touch panels.

14. The integrated control method for electronic devices according to claim 13, **characterized in that** after S20, the integrated control method further comprises the following action:
according to the touch signal generated by the corresponding one of the plurality of touch panels which is being operated, controlling the projector to project a first interface on an area associated to the corresponding one of the plurality of touch panels.

15. The integrated control method for electronic devices according to claim 14, **characterized in that** after S30, the integrated control method further comprises the following action:
controlling the projector to project a second interface marching with a state of the corresponding electronic device which have been operated, to the area associated to the corresponding one of the plurality of touch panels.

16. The integrated control method for electronic devices according to claim 13, wherein S20 comprises the following actions:
S22, detecting a first touch signal generated by a corresponding one of the plurality of touch panels under a first operation;
S24, inquiring a location of the corresponding one of the plurality of touch panels which is being operated, according to the first touch signal;
S26, controlling the projector to project a first interface to the location; and
S28, detecting a second touch signal generated by the corresponding one of the plurality of touch panels with the first interface projected thereon, when the one of the plurality of touch panels is operated under a second operation;
wherein S30 comprises: controlling the corresponding electronic device to perform a corresponding operation according to the second touch signal.

17. The integrated control method for electronic devices according to claim 16, **characterized in that** the first operation and the second operation together comprise at least two operations of single finger clicking, multi-finger clicking, single finger multi-clicking, sliding and pressing; the first operation is different from the second operation.

18. The integrated control method for electronic devices according to claim 16, **characterized in that** after S30, the integrated control method further comprises:
controlling the projector to project a second interface to the location, wherein the second interface marches with a state of the corresponding electronic device which has been operated.

19. The integrated control method for electronic devices according to claim 16, **characterized in that** between S24 and S26, the integrated control method further comprises:
inquiring a shape of the corresponding one of the plurality of touch panels in a preset touch panel shapes list according to the first touch signal, wherein the preset touch panel shapes list stores shapes information of the plurality of touch panels; and
adjusting parameters of the projector according to the shape of corresponding one of the plurality of touch panels which is being operated, such that a picture projected by the projector matches with the shape of the corresponding one of the plurality of touch panels.

20. The integrated control method for electronic devices according to claim 16, **characterized in that** between S22 and S24, the integrated control method further comprises:
determining whether multiple ones of the plurality of touch panels is being simultaneously operated, if no, going to next step, if yes, determining a priority of each of the multiple ones of the plurality of touch panels; and
receiving a first touch signal generated by a corresponding one of the multiples ones of the plurality of touch panels with the highest priority under the first operation.
